# EUROPEAN PATENT SPECIFICATION

(11) **EP 3 543 122 B1**
(45) Date of publication and mention of the grant of the patent: **09.06.2021**
(21) Application number: 18163746.3
(22) Date of filing: 23.03.2018
(51) Int. Cl.: B64D 11/06, B60N 2/90, B60N 2/18, B60N 2/22, B60N 2/34, A47C 1/035

(54) **LEG-REST ASSEMBLY**
BEINSTÜTZENANORDNUNG
ENSEMBLE REPOSE-JAMBES

(43) Date of publication of application: 25.09.2019
(73) Proprietor: Adient Aerospace, LLC, Bothell, WA 98011 (US)
(72) Inventor: Pugh, Samuel David, 67657 Kaiserslautern (DE); Weingart, Andreas, 67700 Niederkirchen (DE)
(74) Representative: Arnold & Siedsma

(56) References cited:
- WO-A1-2015/153944
- US-A- 5 352 020
- US-A1- 2002 003 370
- US-A1- 2002 109 389
- US-A1- 2002 113 478
- US-A1- 2003 075 964
- US-A1- 2014 225 400

## Description

The invention relates to a leg-rest assembly for a seat, in particular for a vehicle, such as an aircraft.

### DESCRIPTION OF THE RELATED ART

There are a wide variety of leg-rest assemblies for vehicle seats, in particular aircraft passenger seats known in the prior art.

DE 43 00 958 A1, WO 2015/153944 A1, WO 2011/070531 A1, each of them describes a seat having a seat pan and an extendable leg-rest, wherein a spring device is coupled to the extendable leg-rest.

Further leg-rest assemblies are known from US 2003/075964 A1, US 2002/003370 A1 and US 2002/109389 A1.

### SUMMARY OF THE INVENTION

It is an object of the present disclosure to improve a leg-rest assembly for a seat, in particular for a vehicle, such as an aircraft. Further, an object of the present invention is to reduce a number of electric drive units arranged in the vehicle seat and assembly dimensions of the leg-rest assembly. The object is achieved by a leg-rest assembly for a seat according to claim 1 or 6. Further, the object is achieved by a seat, particularly vehicle seat, such as an aircraft seat, comprising such leg-rest assembly according to claim 15.

Preferred embodiments of the invention are given in the dependent claims.

The present disclosure provides a leg-rest assembly for a seat, in particular for a vehicle seat, such as an aircraft seat, comprising a leg support configured to be pivotably mounted to a seat support structure of the vehicle seat. For example, the leg support is pivotably mounted to a seat pan. The leg support comprises a main portion and at least one extension portion which is longitudinally displaceable coupled to the main portion. Further, the leg-rest assembly comprises one power-driven adjusting device for pivoting the leg support relative to the seat support structure particularly the seat pan. The leg support is pivotable between a first position and at least a second position relative to the seat support structure by the adjusting device. Moreover, the leg-rest assembly comprises a displacement mechanism coupled to the leg support and which is configured to mechanically control a longitudinal displacement of the extension portion depending on a pivot movement of the leg support. The displacement mechanism comprises at least one force transmission configuration and at least one biasing element, wherein the force transmission configuration is configured to mechanically retract the extension portion relative to the main portion as the leg support pivots from the second position into the first position. Furthermore, the biasing element is configured to mechanically push the extension portion relatively away from the main portion as the leg support pivots from the first position into the second position.

It is understood that a retraction of the extension portion corresponds to a movement of the extension portion towards the seat support structure. Thereby, the extension portion is in a stowed position. Pushing the extension portion relatively away from the main portion corresponds to a movement of the extension portion away from the seat support structure to function as an extended leg-rest or footrest for a passenger.

In particular, the displacement mechanism is arranged between the main portion and the extension portion and creates a kinematic linkage system, particularly a substantially mechanical linkage system. Thereby, the kinematic linkage system is provided between a pivot adjustment, particularly angle adjustment, of the leg support relative to the seat pan and an extension path of the extension portion relative to the main portion. Depending on a pivot movement of the leg support, a movement of the extension portion is substantially mechanically actuated. In other words: An angular adjustment of the leg support can be at least partially mechanically converted to a linear motion of the extension portion relative to the main portion. Therefore, only one adjusting device, such as a motor drive unit or electric actuator, is needed to adjust the angle of the leg support and substantially simultaneously and automatically the longitudinal displacement of the extension portion. In particular, the leg-rest assembly according to the present invention is cost-efficient whilst ensuring a comparatively light weight assembly by using a reduced number of motor drive units for the vehicle seat.

Further, the force transmission configuration and the biasing element are interacting with one another and with the leg support in such a manner, that a force distribution of each of the biasing element and the force transmission configuration can be used efficiently. Thereby, the extension portion is configured to retract to a force exerted either by the force transmission configuration or the biasing element. Exemplarily, as the leg support moves from the first position to the second position, a thrust force of the biasing element is greater than a retraction force of the force transmission configuration. As the leg support moves from the second position to the first position, the retraction force of the force transmission configuration is greater than the thrust force of the biasing element. Therefore, a substantially mechanical adjustment actuation is provided by the displacement mechanism, wherein the substantially mechanical adjustment is actuated by the pivot movement, for example power driven pivot movement of the leg support relative to the seat pan.

In another possible embodiment of the leg-rest assembly, the leg support comprises
- a first extension portion and a second extension portion,
- wherein the first extension portion is longitudinally displaceable coupled to the main portion by means of a first guide mechanism and the second extension portion is longitudinally displaceable coupled to the first extension portion by means of a second guide mechanism,
- the displacement mechanism comprising the force transmission configuration and at least two biasing elements,
- wherein the force transmission configuration comprises a first transmission element coupling the first extension portion to the seat support structure and a second transmission element coupling the second extension portion to the main portion,
- wherein a first biasing element is coupled to the main portion and to the first extension portion, and a second biasing element is coupled to the first extension portion and to the second extension portion.

Each of the transmission elements is configured to retract a corresponding extension portion relative to the main portion as the leg support moves from the second position to the first position. More precisely, the first transmission element is configured to retract the first extension portion relative to the main portion, whereas the second transmission element is configured to retract the second extension portion relative to the first extension portion. The first biasing element is configured to push the first extension portion relatively away from the main portion, whereas the second biasing element is configured to push the second extension portion relatively away from the first extension portion as the leg support moves from the first position into the second position. For instance, both of the retraction movements of the transmission elements are initiated substantially simultaneously. Additionally, the pushing movement of the biasing elements are initiated substantially simultaneously. This provides a smooth and continuous longitudinal displacement of the extension portions. In particular, this leg support can ensure a comparatively better compensation of a weight force of a seated passenger when moving from the first position to the second position or vice versa. Therefore, a distribution of forces can be optimised. Further, it is possible to provide a bigger sleeping and extension surface by assembling two extension portions within the leg support.

According to the present invention of the leg-rest assembly, the leg-rest assembly can be comparatively simply mounted to any seat support structure, particularly any seat pan frame. Further, the leg-rest assembly can be mounted as a complete assembly comprising pre-mounted parts, wherein the complete assembly can be mounted to a pivot axis provided by a front seat pan side of the seat pan frame. Moreover, the complete assembly can be individualized as desired by a customer. Therefore, dimensions, particularly width, height and length of the complete assembly or of single parts of the leg-rest assembly, can be customized.

In particular, the seat support structure comprises a seat pan having a seat pan frame and a backrest having a backrest frame which is pivotably mounted to the seat pan frame at a backrest pivot axis. Thereby, the seat pan frame can comprise two lateral seat pan sides, a front seat pan side and a back seat pan side, wherein the backrest frame is pivotably mounted to the back seat pan side at the backrest pivot axis. Further, the leg support is pivotably mounted to the front seat pan side. The seat support structure can comprise at least one adjusting device for adjusting the backrest relative to the seat pan. Especially, the backrest and the leg support can be articulated with respect to the seat pan such that the seat is positionable into at least one of a taxi, takeoff and landing position, a comfort inclined position or a sleeping position. Further, the seat support structure can comprise a shoulder and/or head support.

According to the present invention of the leg-rest assembly, the first position of the leg support corresponds to the taxi, takeoff and landing position of the vehicle seat, in which the leg support is substantially positioned perpendicular to the seat pan. The second position of the leg support corresponds to the comfort inclined position or to the sleeping position of the seat, in which the leg support is inclined at an angle relative to the seat pan or in which the leg support is in a substantially horizontal position. For example, when the leg support is in the second position, the main portion forms a calf support and the extension portion forms an extendable foot support. In the first position of the leg support, the main portion and the extension portion which is retracted with respect to the main portion are forming the calf support for the passenger in the taxi, takeoff and landing position.

For instance, each of the main portion and the extension portion comprises a support panel. The support panel can be made of synthetic material or metal material, such as a metal sheet. In particular, each of the support panel can be formed as a thin but stiff support plate. Thereby, an upholstery carrier or a cushion can be attached to each of the support panel. Further, the support panel of the extension portion can be arranged displaceable on an upper surface of the support panel of the main portion. The upper surface corresponds to a surface which faces the passenger. In particular, the extension portion is arranged on the upper surface of the main portion in an overlapping manner. Thereby, the extension portion can be partially or fully enclosing the main portion in the retracted position.

In another embodiment of the leg-rest assembly, the extension portion can be retracted into the main portion. For example, the support panel of the extension portion comprises smaller dimensions as the dimensions of the support panel of the main portion such that the extension portion can be partially or fully inserted into the main portion. Thereby, the main portion is partially or fully enclosing the extension portion in the retracted or stowed position. Furthermore, the main portion can be formed as a housing of the extension portion.

According to a further embodiment of the leg-rest assembly, the force transmission configuration is configured to compress, particularly continuously compress the biasing element as the leg support moves from the second position to the first position. Exemplarily, as the force transmission configuration retracts the extension portion, the biasing element will be substantially continuously compressed till the extension portion is in a partially stowed or fully stowed position relative to the main portion.

In another embodiment of the leg-rest assembly, the force transmission configuration is configured to hold the biasing element in a compressed state when the leg support is in the first position. Further, the force transmission configuration is configured to relax, particularly loosen as the leg support moves from the first position to the second position. Thereby, a relaxation or loosening of the force transmission configuration enables the biasing element to deploy, particularly substantially continuously, as the leg support moves from the first position to the second position. That means that force transmission configuration is configured to release the extension portion such that the biasing element can act on the extension portion. For instance, an extent of the release depends on an extent of a pivot angle of the leg support with respect to the seat pan.

The present disclosure further provides a leg-rest assembly comprising a leg support configured to be pivotably mounted to a seat support structure,
- wherein the leg support comprises a main portion and at least one extension portion which is longitudinally displaceable coupled to the main portion,
- one power-driven adjusting device for pivoting the leg support relative to the seat support structure,
- wherein the leg support is pivotable between a first position and at least a second position relative to the seat support structure by the adjusting device,
- a displacement mechanism coupled to the leg support and which is configured to mechanically control a longitudinal displacement of the extension portion depending on a pivot movement of the leg support,
- the displacement mechanism comprises at least one force transmission configuration and at least one biasing element,
- wherein the force transmission configuration is configured to mechanically pull the extension portion relatively away from the main portion as the leg support pivots from the first position to the second position, and
- the biasing element is configured to mechanically retract the extension portion relative to the main portion as the leg support pivots from the second position into the first position. For example, the force transmission configuration comprises at least one of a Bowden cable which is configured to initiate a pulling force on the extension portion. The biasing element can be one of a tension spring which is configured to retract the extension portion under tensile stress. Thereby, as the leg support moves from the first position to the second position, a pulling force of the force transmission configuration is greater than traction of the biasing element. The force transmission configuration, particularly the Bowden cable, is configured to relax, particularly loosen as the leg support moves from the second position to the first position such that the biasing element reverts into its normal, particularly tensed state retracting the extension portion.

According to a further possible embodiment of the leg-rest assembly, the force transmission configuration comprises at least one transmission element coupled to the extension portion and to the main portion. Thereby, a comparatively compact assembly can be provided by the leg-rest assembly. In particular, the extension portion can be effectively retracted relative to the main portion by directly connecting both of the extension and the main portions. Optionally or additionally, the force transmission configuration comprises at least one transmission element fixed with respect to a pivot axis of the leg support and with respect to the extension portion. Particularly, the transmission element is fixed to the front seat pan side and to the leg support, for example to the main portion. Thereby, the pivot movement of the leg support relative to the front seat pan side directly causes the transmission element to change in force. Thereafter, the transmission element is configured either to retract the extension portion or to relax such that the biasing element can push the extension portion into an extended position.

In another embodiment of the leg-rest assembly, the force transmission configuration comprises at least one transmission element relatively connected with a pivot fitting of the leg support and the extension portion. In particular, the pivot fitting provides a force transmission point between the pivot movement of the leg support relative to the seat pan and the longitudinal displacement movement of the extension portion relative to the main portion. For example, the transmission element can be wind or unwind around a path, particularly a radius of the pivot fitting linking the extension portion to the pivot fitting. Therefore, the pivot fitting provides a control contour such that the displacement of the extension portion is initiated by a rotational movement of the pivot fitting. Optionally or additionally, the Bowden cable of the transmission element can be coupled to a corresponding cable wheel which is connected to, particularly wound around a limitation wheel. The limitation wheel can further be coupled to a transmission rod connecting the pivot fitting. Further, a rotation spring can be coupled to at least one of the cable wheel and to the limitation wheel to work against the biasing element and to keep tension on the Bowden cable in case of an anti-trap.

Particularly, the transmission element comprises at least one of a flexible element, such as a Bowden cable, or a belt mechanism or a rope mechanism or a wire mechanism or the like. For example, the belt drive mechanism, such as belt transmission, comprises at least one of a strap or belt interacting with at least one of a pulley, deflection roller, guide pulley or a transmission lever. The rope drive mechanism, such as rope transmission, comprises at least one of a wire, cable or a towing rope interacting with at least one of a pulley, deflection roller, winch or a transmission lever.

In one embodiment of the leg-rest assembly, the biasing element is arranged diagonally connecting the extension portion and the main portion. Optionally, the biasing element is arranged aligned parallel to a longitudinal axis of the leg support.

According to a further embodiment of the leg-rest assembly, one end portion of the biasing element is fixed to the main portion and another end portion of the biasing element is fixed to the extension portion. Thereby, a distance between the first end portion and the second end portion increases as the leg support moves from the first position to the second position. Moreover, an extension range of the extension portion with respect to the main portion depends on a deployment range of the biasing element. Particularly, the deployment range of the biasing element is provided by a length of a deployable piston rod of the biasing element.

According to an exemplary embodiment of the leg-rest assembly, the biasing element comprises at least one of a pressure spring element or a gas pressure spring element. Optionally or additionally, the biasing element can comprise one of a mechanical biasing element, a pneumatically operated or hydraulically operated damping or pressure element. Particularly, using such a biasing element is a substantially cost-saving and weight-saving solution whilst meeting requirement to efficiently support the extension portion. In particular, when the force transmission configuration releases the extension portion as the leg support moves from the first position to the second position, the biasing element is enabled to deploy into a normal, relaxed state. Therefore, the biasing element can push out the extension portion into the extended position.

According to a possible embodiment of the leg-rest assembly, the leg support comprises at least one guide mechanism for longitudinal displacement of the extension portion relative to the main portion. Moreover, the extension portion is coupled to a guide carriage of the guide mechanism which is displaceable, particularly slidable fixed to a guide track of the guide mechanism, wherein the guide track is fixed to the main portion.

The disclosure further relates to a seat for a vehicle, in particular to a seat for an aircraft or any other passenger carrying vehicle, comprising a leg-rest assembly as described above and hereafter.

According to an exemplary embodiment of the seat, the leg-rest assembly is pivotably mounted to a seat support structure, such as a frame structure, comprising a seat pan having a seat pan frame and a backrest having a backrest frame which is pivotably mounted to the seat pan frame at a backrest pivot axis. Further, the leg-rest assembly is pivotably mounted to the seat pan frame at a leg-rest pivot axis, wherein the leg-rest assembly and the backrest are articulated with respect to the seat pan such that the seat support structure is positionable into at least one of a taxi, takeoff and landing position, a comfort inclined position or a sleeping position.

The taxi, takeoff and landing position of the seat is a position in which the backrest is in a substantial upright position with respect to the seat pan and/or a base. In particular, the backrest is in a position with an angle with respect to a vertical axis of about 3° to 12°. The leg-rest assembly is in a position with an angle with respect to the vertical axis of about 0° or less than 0°, for example -3° to -10°.

The comfort inclined position of the seat is a substantial inclined position in which the backrest and/or the leg-rest assembly are in a substantial inclined position. In particular, the backrest is in a position with an angle with respect to the vertical axis of about more than 12° and less than 90°. The leg-rest assembly is in a position with an angle with respect to the vertical axis of about more than 0° and less than 85°.

The sleeping position of the seat is a position in which the backrest and/or the leg-rest assembly are in a substantial inclined position. In particular, the backrest is in a position with an angle with respect to the vertical axis of about 90°, in particular between 85° and 95°. The leg-rest assembly is in a position with an angle with respect to the vertical axis of about 45°, in particular between 40° and 50°.

According to an exemplary embodiment of the seat, the leg-rest assembly is pivotably mounted to the seat pan by at least one of a pivot fitting in the leg-rest pivot axis. In particular, the leg-rest assembly is pivotably mounted to the seat pan by two pivot fittings on each side of lateral seat pan frame sides. The backrest can also be pivotably connected to the seat pan by at least one of a backrest pivot fitting in the backrest pivot axis.

Furthermore, the seat support structure can comprise a number of adjustment devices comprising drive units to electrically adjust the backrest, the leg-rest assembly and/or to drive a recliner mechanism by driving at least one of a pivot fitting. For example, the recliner mechanism is configured as a rotary recliner or a ratchet recliner. In particular, the recliner mechanism is configured as a wobble drive mechanism arranged in the leg-rest pivot axis.

According to an embodiment of the seat, the pivot fitting of at least the leg-rest assembly is configured as an electric-powered adjustable fitting. In particular, the adjusting device comprises a pivot fitting which is configured as an electric-powered continuously adjustable fitting. In an exemplary embodiment, at least one of the seat pan, the leg-rest assembly and optionally the backrest comprises a single electric-powered continuously adjustable fitting on each of their lateral sides.

In an exemplary embodiment, the adjusting device is configured to continuously adjust a transmission rod coupling two corresponding pivot fittings to at least one of the seat pan, the leg-rest assembly and optionally the backrest.

In an exemplary embodiment, at least one of the pivot fittings, the adjusting device or the transmission rod comprises an override mechanism which brings the seat pan, the backrest and the leg-rest assembly in the taxi, takeoff and landing position in case that the electric-powered continuously adjustable fitting failed. For example, the override mechanism is configured as a manual crank.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figures 1A to 1C: are each a schematic side view of a vehicle seat in one of a taxi, takeoff and landing position, an inclined comfort position and a sleeping position,
- Figures 2A to 2C: are each a perspective view of an embodiment of a legrest assembly pivotably mounted to a seat support structure,
- Figures 3A to 3E: are each a schematic side view of an embodiment of the leg-rest assembly in different positions,
- Figures 4A to 4E: are each a schematic perspective view of a further embodiment of the leg-rest assembly having different shaped support panels,
- Figures 5A to 5C: are each a perspective view of another embodiment of the leg-rest assembly,
- Figure 6A: is a schematic side view of another embodiment of the legrest assembly,
- Figure 6B: is a schematic top view of an embodiment of a component of a force transmission configuration mounted to the leg-rest assembly according to figure 6,
- Figures 7A and 7B: are each a schematic side view of a further embodiment of the leg-rest assembly and
- Figures 8A and 8B: are each a schematic side view of a further possible embodiment of the leg-rest assembly.

Corresponding parts are marked with the same reference symbols in all figures.

### DETAILED DESCRIPTION OF PREFERRED EMBODIMENTS

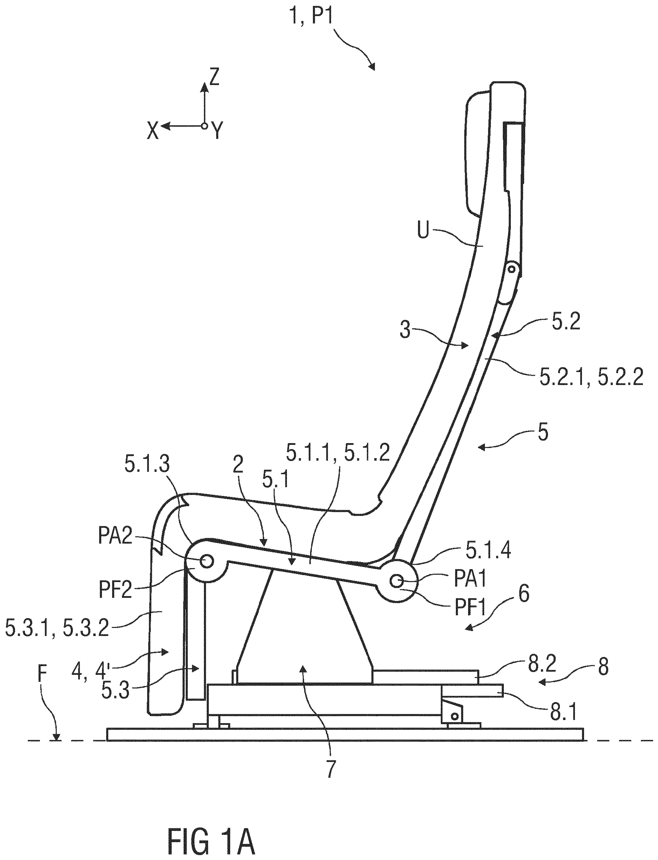

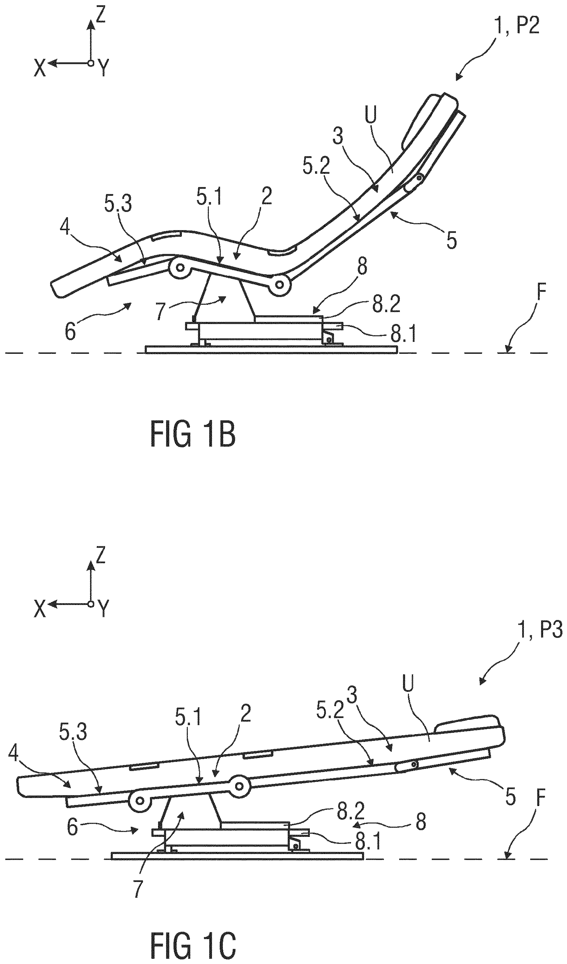

**Figures 1A to 1C** show each a side view of an embodiment of a seat 1 for a not further shown vehicle, in particular for an aircraft or other passenger carrying vehicle. In particular, **figure 1A** shows the seat 1 in a taxi, takeoff and landing position, which is further designated as TTL position P1. **Figure 1B** shows the seat 1 in an inclined comfort position P2 and **figure 1C** shows the seat 1 in a sleeping position P3, particularly a bed position having a substantially flat horizontal bed surface.

For a better understanding of subsequent descriptions of the seat 1 a coordinate system is shown in further figures. The coordinate system comprises a longitudinal axis x, a transverse axis y and a vertical axis z in relation to the vehicle.

The seat 1 comprises a seat pan 2, a backrest 3 and a leg-rest assembly 4, 4'. In one embodiment, the backrest 3 can comprise additionally a shoulder support or a headrest support. Further, the leg-rest assembly 4, 4' is extendable.

The seat 1 comprises a seat support structure 5 which is connected to a base structure 6. In the shown embodiment the seat support structure 5 provides an upholstery U. In one embodiment, the upholstery U comprises at least one of a seat pan upholstery part, a backrest upholstery part and a leg-rest upholstery part. Alternatively, the upholstery U is configured as a one-piece upholstered part.

The seat support structure 5 provides a seat pan frame 5.1 for the seat pan 2 with two lateral seat pan sides 5.1.1, 5.1.2, wherein only one of the two lateral seat pan sides 5.1.1, 5.1.2 is shown in the **figures 1A to 1C****.** Additionally, the seat pan frame 5.1, thereby the seat pan 2, comprise a front seat pan side 5.1.3 and a back seat pan side 5.1.4.

Further, the seat support structure 5 comprises a backrest frame 5.2 for the backrest 3 which is pivotably mounted to the back seat pan side 5.1.4 at a backrest pivot axis PA1, which is understood as an axis parallel to the transverse axis y. The backrest frame 5.2 further comprises two lateral backrest sides 5.2.1, 5.2.2, wherein only one of the two lateral backrest sides 5.2.1, 5.2.2 is shown in **figures 1A to 1C****.**

Additionally, a leg-rest frame 5.3 for the leg-rest assembly 4, 4' is provided by the seat support structure 5, wherein the leg-rest frame 5.3 is pivotably mounted to the front seat pan side 5.1.3 at a leg-rest pivot axis PA2, which is understood as an axis parallel to the transverse axis y.

Hence, the seat pan 2, the backrest 3 and the leg-rest assembly 4, 4' can be articulated with respect to each other such that the seat 1 is positionable into at least one of the TTL position P1, the inclined comfort position P2 and a sleeping position P3. Additionally, the shoulder support and/or the headrest support can be articulated and so adjusted about not shown pivot axes.

According to an exemplary embodiment, the backrest frame 5.2 is pivotably connected to the seat pan frame 5.1 by at least one of a backrest pivot fitting PF1 in the backrest pivot axis PA1. The leg-rest frame 5.3 is pivotably connected to the seat pan frame 5.1 by at least one of a leg-rest pivot fitting PF2 in the leg rest pivot axis PA2. For example, each of the pivot fittings PF1, PF2 is provided by a recliner mechanism and thereby comprising recliner fittings.

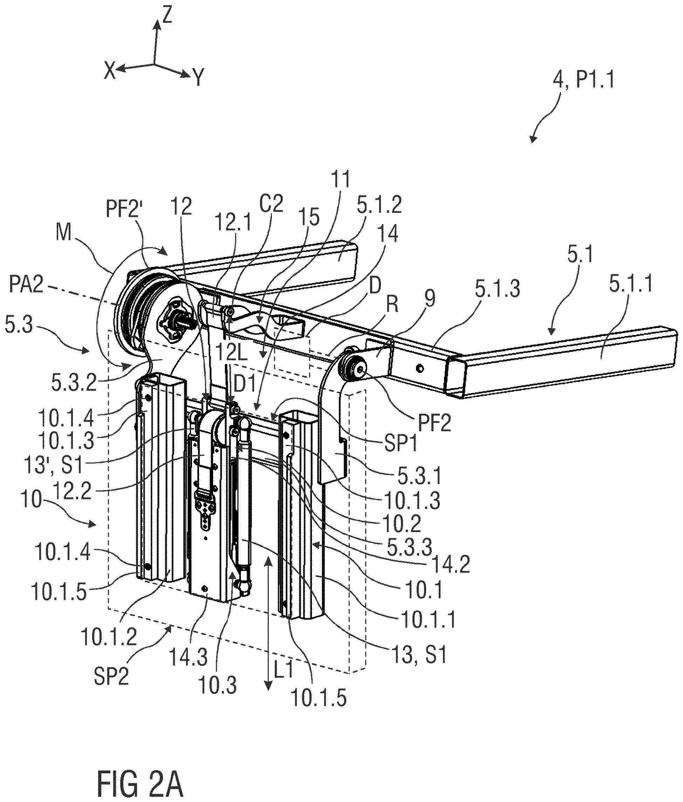

According to an embodiment, the pivot fitting PF2 of at least the leg-rest assembly 4, 4' is configured as an electric-powered adjustable fitting. In particular, the seat 1 comprises an adjusting device D, schematic shown in **figure 2A****,** coupled to the pivot fitting PF2 of the leg-rest assembly 4, 4' which is configured, exemplary as an electric-powered continuously adjustable fitting or as a general drive unit. For example, the leg-rest frame 5.3 comprises a single electric-powered continuously adjustable fitting on each of lateral leg-rest sides 5.3.1, 5.3.2, wherein only one of the two lateral leg-rest sides 5.3.1, 5.3.2 is shown in **figures 1A to 1C****.**

In an exemplary embodiment, the adjusting device D is configured to continuously adjust a transmission rod R shown in **figure 2A****,** coupling at least one of the two pivot fittings PF2 of the leg-rest frame 5.3. Further, the transmission rod R is configured as a connection rod coupling the two pivot fittings PF2.

The seat pan frame 5.1 is connected to the base structure 6 by a mounting element 7. For example, the mounting element 7 is a fixation bracket. Particularly, each of the lateral seat pan sides 5.1.1, 5.1.2 is fixedly connected to the base structure 6 by one mounting element 7. For example, the base structure 6 is arranged on a vehicle floor F and so providing fixation of the seat 1 to the vehicle floor F.

The base structure 6 provides a track assembly 8 for length adjustment of the seat 1. Therefore, the track assembly 8 provides a length adjuster for the seat 1.

The track assembly 8 provides a pair of tracks 8.1, 8.2 on each lateral side of the seat 1. The track assembly 8 comprises a lower track 8.1 fixedly coupled to the vehicle floor F. Further, the track assembly 8 comprises an upper track 8.2 which is slidable coupled to the lower track 8.1 for a sliding movement in a longitudinal direction of the vehicle.

In the shown embodiment, the mounting element 7 is fixedly and immovable coupled to the upper track 8.2. When the upper track 8.2 moves relative to the lower track 8.1, the mounting element 7 and so the seat 1 moves together with the upper track 8.2 in longitudinal direction.

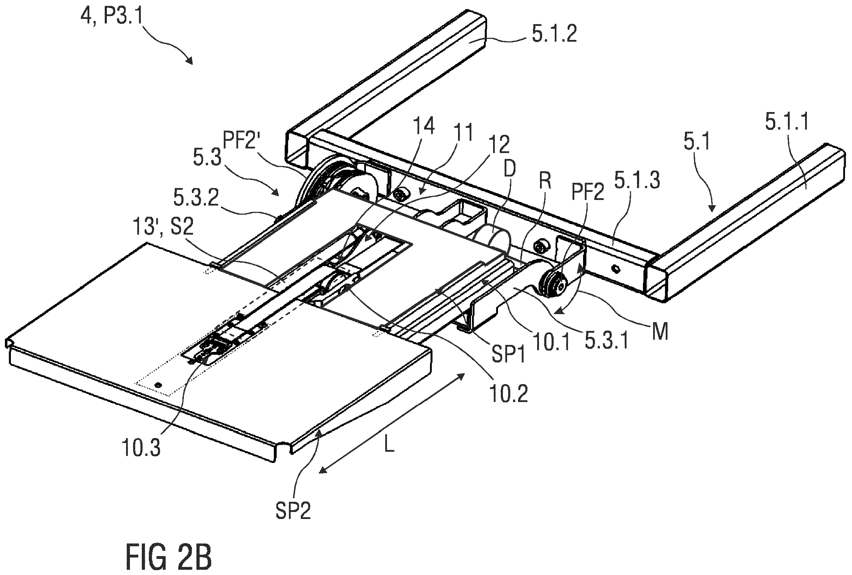

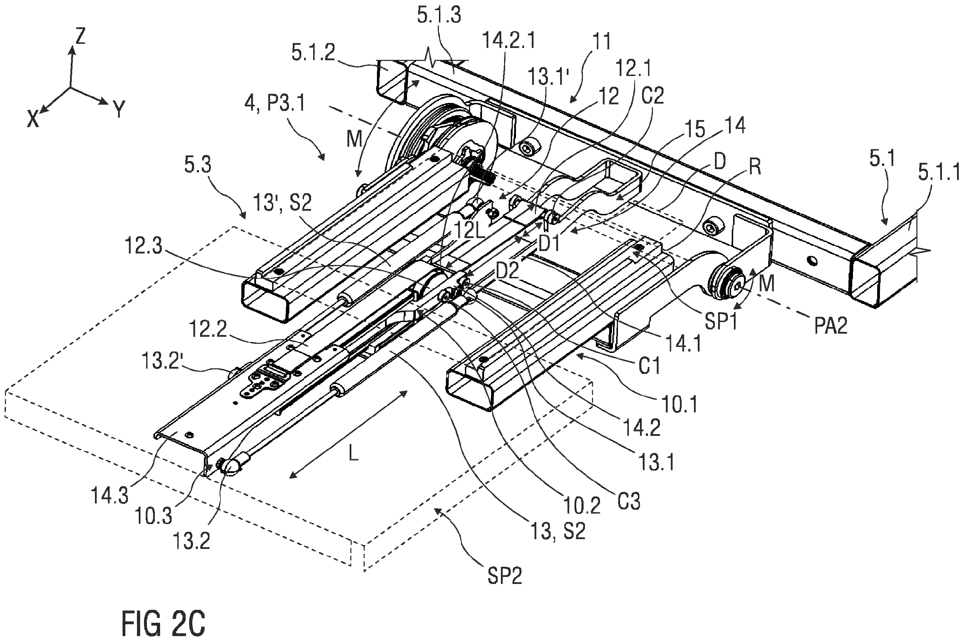

**Figures 2A to 2C** are each a perspective view of an embodiment of the leg-rest assembly 4 pivotably mounted to the seat support structure 5, particularly to the front seat pan side 5.1.3 of the seat pan frame 5.1. **Figure 2A** shows the leg-rest assembly 4 in a first position P1.1 which corresponds to the TTL position P1 of the seat 1. **Figures 2B** **and** **2C** are each showing the leg-rest assembly 4 in a second position P3.1 which corresponds to the sleeping position P3.

In particular, the lateral leg-rest sides 5.3.1, 5.3.2 of the leg-rest frame 5.3 are each pivotably mounted to the front seat pan side 5.1.3.

In the shown embodiment, the pivot fitting PF2 is of smaller dimensions as dimensions of the pivot fitting PF2' of the leg-rest frame 5.3. It is understood that the term "dimensions" refers to a diameter of each of the pivot fittings PF2, PF2'. Therefore, a bracket 9 is used to mount the corresponding lateral leg-rest side 5.3.1 to the front seat pan side 5.1.3 such that the pivot axis PA2 is kept substantially parallel to the transverse axis y. Further, the lateral leg-rest sides 5.3.1, 5.3.2 are connected to each other by a back leg-rest side 5.3.3. The back leg-rest side 5.3.3 is facing towards the seat support structure 5. Particularly, the back leg-rest side 5.3.3 is formed as a substantially rectangular and hollow frame side. Optionally, the lateral leg-rest sides 5.3.1, 5.3.2 and the back leg-rest side 5.3.3 can made of a one-piece bent sheet.

The leg-rest assembly 4 comprises a leg support 10 configured to be pivotably mounted to the seat pan frame 5.1. Therefore, the leg support 10 comprises the adjusting device D for adjusting the leg support 10 relative to the seat support structure 5, particularly the seat pan frame 5.1. The leg support 10 is pivotable between the first position P1.1 and the second position P3.1 by the adjusting device D.

Particularly, the leg support 10 comprises a main portion 10.1. The main portion 10.1 is configured as main body of the leg support 10 being pivotably mounted to the front seat pan frame 5.1 by the lateral leg-rest sides 5.3.1, 5.3.2. The main portion 10.1 comprises two transversal spaced-apart lateral frame extensions 10.1.1, 10.1.2. The lateral frame extensions 10.1.1, 10.1.2 are formed as substantially rectangular and hollow frame sides. Each of the lateral frame extensions 10.1.1, 10.1.2 is attached one of the lateral leg-rest sides 5.3.1, 5.3.2 and the back leg-rest side 5.3.3.

Further, the leg support 10 comprises two extension portions 10.2, 10.3. The extension portions 10.2, 10.3 are each carried by the main portion 10.1. Thereby, each of the extension portions 10.2, 10.3 is configured to follow a pivot movement M of the leg support 10, particularly of the main portion 10.1.

Exemplary, both of the extension portions 10.2, 10.3 are arranged between the two lateral frame extensions 10.1.1, 10.1.2. In particular, a first extension portion 10.2 is longitudinally displaceable mounted to the main portion 10.1, particularly to the back leg-rest side 5.3.3. A second extension portion 10.3 is longitudinally displaceable mounted to the first extension portion 10.2.

For instance, the leg support 10 comprises a sandwich configuration, wherein the main portion 10.1 forms a back support element, facing away from a passenger. The first extension portion 10.2 forms a second support element, arranged between the main portion 10.1 and the second extension portion 10.3. Thereby, the second extension portion 10.3 forms a front support element, facing towards the passenger.

In particular, the main portion 10.1 comprises a support panel SP1 which is shown as dotted lines. For example, the support panel SP1 provides a calf support panel to the passenger when the leg support 10 is pivoted and extended into the second position P3.1.

Additionally, the support panel SP1 is configured as a cover plate to at least partially cover a displacement mechanism 11 of the leg support 10. The displacement mechanism 11 is configured to control a longitudinal displacement L of each of the extension portions 10.2, 10.3 relative to the main portion 10.1. Particularly, the extension portions 10.2, 10.3 are each relatively displaceable with respect to the front seat pan side 5.1.3.

The support panel SP1 is mounted to the two lateral frame extensions 10.1.1, 10.1.2 by mounting elements 10.1.3. For example, the support panel SP1 is mounted to each of the mounting elements 10.1.3 via fixations elements 10.1.4, such as screws or the like.

Moreover, each of the mounting elements 10.1.3 mounted to the lateral frame extensions 10.1.1, 10.1.2 comprises a guide bar 10.1.5. The guide bar 10.1.5 is provided to guide a support panel SP2, shown as dotted lines, of the second extension portion 10.3. Further, the support panel SP2 provides a foot support panel to the passenger when the leg support 10 is pivoted and extended into the second position P3.1. Additionally, the support panel SP2 is configured as a cover plate covering the displacement mechanism 11. Moreover, the support panel SP2 is overlapping the support panel SP1 of the main portion 10.1 in the first position P1.1 of the leg support 10.

According to the longitudinal displacement L of each of the extension portions 10.2, 10.3 relative to the main portion 10.1 and relative to each other, the leg support 10 comprises a guide mechanism 14. The guide mechanism 14 comprises a guide track 14.1 which is immovable fixed to the main portion 10.1 providing a guiding for the first extension portion 10.2. Further, the guide mechanism 14 comprises a first guide carriage 14.2 which is displaceable, particularly slidable fixed to the guide track 14.1 of the guide mechanism 14. The first guide carriage 14.2 is provided to longitudinally displace the first extension portion 10.2 relative to the main portion 10.1. Further, the guide mechanism 14 comprises a second guide carriage 14.3 which is displaceable, particularly slidable fixed to the first guide carriage 14.2. Particularly, the second guide carriage 14.3 is provided to longitudinally displace the second extension portion 10.3 relative to the first extension portion 10.2, so as to the main portion 10.1. For example, the guide mechanism 14 is configured as a general track mechanism or the like. Particularly, the support panel SP2 is fixed to the second guide carriage 14.3 of the second extension portion 10.3 covering the displacement mechanism 11.

Moreover, the displacement mechanism 11 is configured to control, particularly substantially mechanically, the longitudinal displacement L of each of the extension portions 10.2, 10.3. Thereby, the force transmission configuration 12 of the displacement mechanism 11 is configured to retract each of the extension portions 10.2, 10.3 relative to the main portion 10.1. Therefore, the extension portions 10.2, 10.3 can be brought into an overlapping structure as shown in **figure 2A****.**

The longitudinal displacement L depends on the pivot movement M of the leg support 10. That means that the pivot movement M actuates, in particular mechanically initiates the longitudinal displacement L of the extension portions 10.2, 10.3. Therefore, the force transmission configuration 12 comprises a number of transmission elements 12.1, 12.2, 12.3.

A first transmission element 12.1 is configured to couple the first extension portion 10.2 with respect to the seat pan frame 5.1, particularly to the front seat pan side 5.1.3. The first transmission element 12.1 is exemplary fixed to the first guide carriage 14.2 at a connection point C1 and to a mounting element 15 fixed to the front seat pan side 5.1.3. The transmission element 12.1 is pivotably mounted to the mounting element 15. Particularly, the mounting element 15 comprises a wave-shaped contour and a connection point C2 to which the transmission element 12.1 is pivotably mounted. The mounting element 15 is, for example a stiff and immovable fixed bracket element. For instance, the first transmission element 12.1 comprises, exemplarily one of a cable, a strap or a belt. The first transmission element 12.1 has a substantially fixed length 12L. In particular, the tightening so as the length 12L of the first transmission element 12.1 substantially remains the same during the pivot movement M and in each of the first and second positions P1.1, P3.1.

The mounting element 15 is configured to ensure a consistent force transmission and substantially tightening of the first transmission element 12.1 during the pivot movement M of the leg support 10. Particularly, the connection point C2 is arranged with respect to the pivot axis PA2. Further, a distance D1 between the connection point C2 and the main portion 10.1 changes during the pivot movement M of the leg support 10. In particular, as the leg support 10 moves from the first position P1.1 to the second position P3.1, the distance D1 is substantially continuously reducing. In the first position P1.1 the distance D1 corresponds to the length 12L.

Exemplary, the first transmission element 12.1 pulls back the first extension portion 10.2 relative to the main portion 10.1 by pulling back the guide carriage 14.2 into the guide track 14.1 as the leg support 10 moves from the second position P3.1 to the first position P1.1. Conversely, the first guide carriage 14.2 can be driven out of the guide track 14.1, as the leg support 10 is pivoted from the first position P1.1 to the second position P3.1, about a distance D2, as shown in **figure 2C****.** Thereby, the distance D2 and the reduced distance D1 substantially correspond to the length 12L of the first transmission element 12.1.

To support and initiate the longitudinal displacement L of the first extension portion 10.2, one end portion 13.1' of the biasing element 13' is coupled to the main portion 10.1 and another end portion 13.2' is coupled to the first extension portion 10.2. Particularly, the end portion 13.1' is coupled to the guide track 14.1 and the other end portion 13.2' is coupled to the first guide carriage 14.2. Thereby, as the leg support 10 moves from the first position P1.1 to the second position P3.1, the biasing element 13' is enabled to continuously deploy about the distance D2. In particular, the biasing element 13' pushes the first extension portion 10.2 relatively away from the main portion 10.1. For instance, the biasing element 13' comprises a gas pressure spring.

The biasing element 13' is in a compressed state S1, as shown in **figure 2A****,** when the leg support 10 is in the first position P1.1. As shown in **figure 2C****,** the biasing element 13' is in a deployed state S2.

Particularly, the first transmission element 12.1 is configured to compress the biasing element 13' as the leg support 10 moves from the second position P3.1 to the first position P1.1. Further, the first transmission element 12.1 is configured to hold the biasing element 13.1' in the compressed state S1, when the leg support 10 remains in the first position P1.1.

A second transmission element 12.2 is configured to couple the second extension portion 10.3 to the main portion 10.1. In particular, the second transmission element 12.2 is coupled to the second guide carriage 14.3 and to the guide track 14.1. The second transmission element 12.2 comprises, exemplarily one of a flexible element, a cable, a strap or a belt.

To provide a transmission point, a third transmission element 12.3 is mounted to the first extension portion 12.2. In particular, the first guide carriage 14.2 of the first extension portion 10.2 comprises a recess 14.2.1 providing a connection point C3. The third transmission element 12.3 is arranged within the recess 14.2.1 and mounted to the connection point C3. The third transmission element 12.3 comprises, exemplarily one of a guide pulley. In the shown embodiment, the second transmission element 12.2 is guided around the third transmission element 12.3.

To support and initiate the longitudinal displacement L of the second extension portion 10.3, one end portion 13.1 of the biasing element 13 is coupled to the first extension portion 10.2 and another end 13.2 is coupled to the second extension portion 10.3. Particularly, the end portion 13.1 is coupled to the first guide carriage 14.2 and the other end portion 13.2 is coupled to the second guide carriage 14.3. Thereby, as the leg support 10 moves from the first position P1.1 to the second position P3.1, the longitudinal displacement L of the first extension portion 10.2 initiates the longitudinal displacement L of the second extension portion 10.3. In particular, the biasing element 13 is enabled to continuously deploy, moving from the compressed state S1 to the deployed state S2. In particular, the biasing element 13 pushes the second extension portion 10.3 relatively away from the first extension portion 10.2.

As the first transmission element 12.1 starts to retract the first extension portion 10.2, the second transmission element 12.2 will be actuated to pull back the second extension portion 10.3 relatively to the main portion 10.1.

In particular, the longitudinal displacement L of the first guide carriage 14.2 towards the guide track 14.1 causes the second and third transmission elements 12.2, 12.3 to move about the connection point C3, particularly along the guide track 14.1 in a direction relatively towards the main portion 10.1. Particularly, the second transmission element 12.2 is configured to compress the biasing element 13 as the leg support 10 moves from the second position P3.1 to the first position P1.1. Further, the second transmission element 12.2 is configured to hold the biasing element 13 in the compressed state S1, when the leg support 10 remains in the first position P1.1.

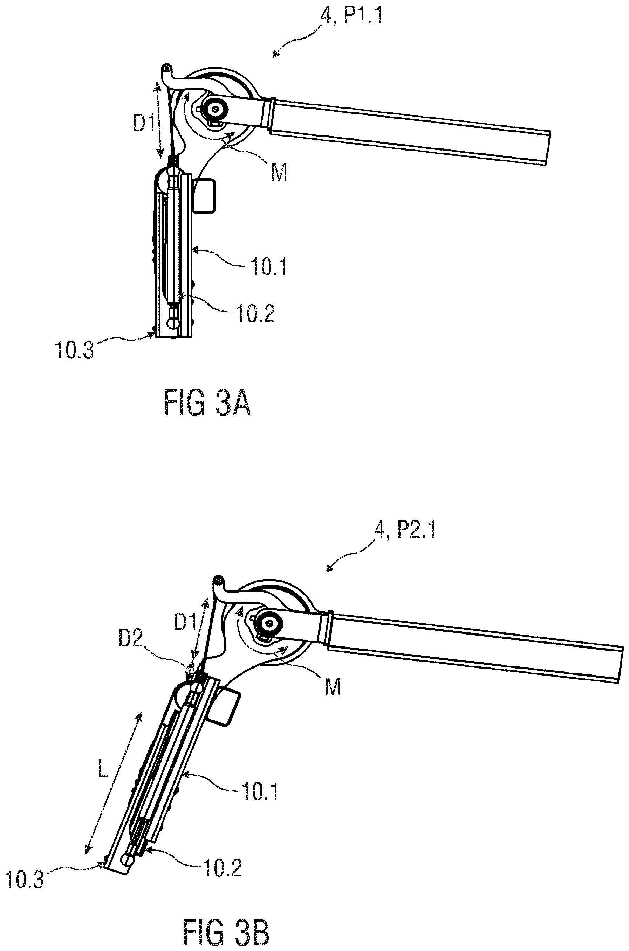

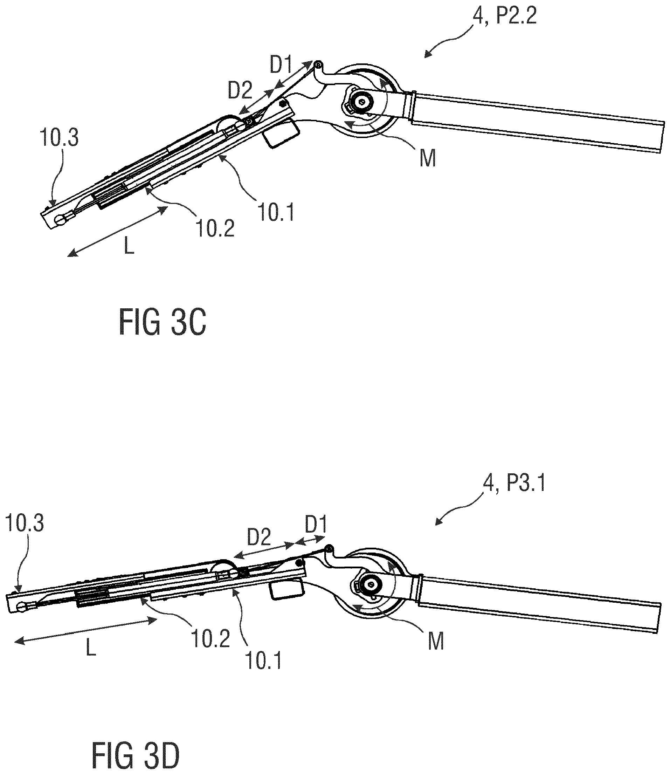

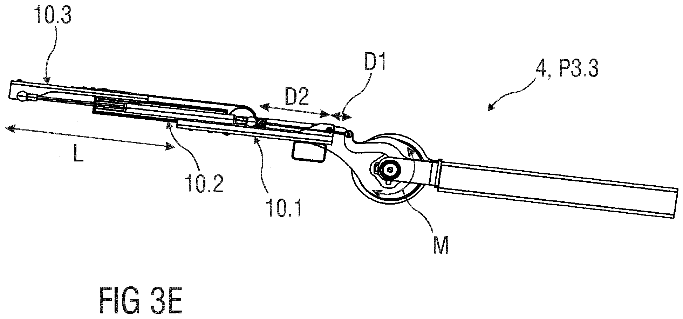

**Figures 3A to 3E** are each showing a side view of the leg-rest assembly 4 in different positions. In particular, **figure 3A** shows the leg-rest assembly 4 in the first position P1.1 corresponding to the TTL position P1 of the seat 1. Each of the **figures 3B to 3E** shows the leg-rest assembly 4 in a different position P2.1, P2.2, P3.2 and P3.3. For example, a successive adjustment of the leg-rest assembly 4 from the first position P1.1 to a substantially horizontal position P3.3 can be seen. Additionally or optionally, the leg-rest assembly 4 can be configured to remain in any one of the shown positions P2.1, P2.2, P3.2 and P3.3. Therefore, the positions P2.1, P2.2 correspond to the inclined comfort position P2 of the seat 1. The positions P3.2, P3.3 correspond to the sleeping position P3 of the seat 1.

The longitudinal displacement L, particularly adjustment, of each of the extension portions 10.2, 10.3 is configured to be performed continuously and substantially simultaneously as the leg-rest assembly 4 moves from the first position P1.1 to the any one of the
positions P2.1, P2.2, P3.2 and P3.3.

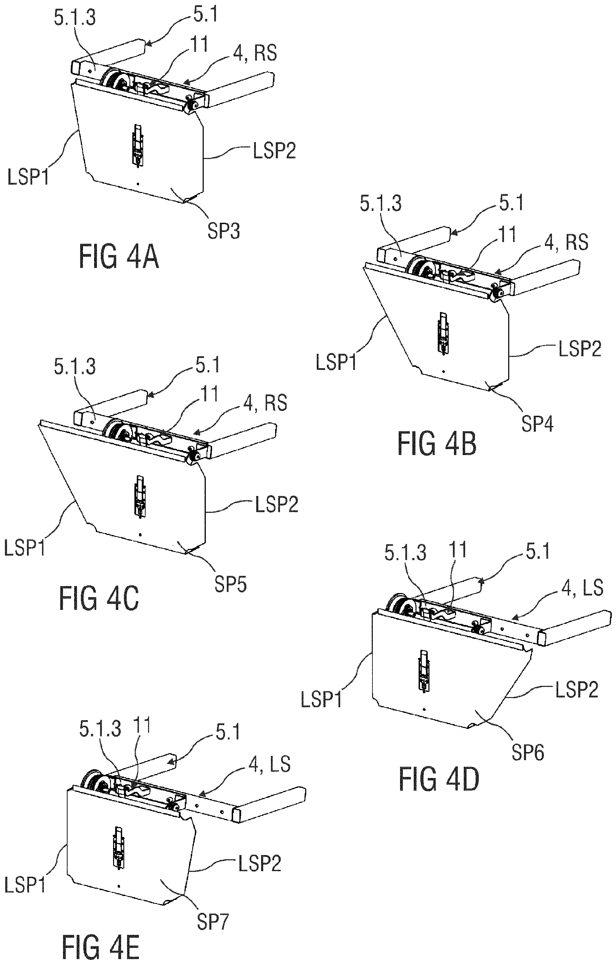

**Figures 4A to 4E** are each a perspective view of a further embodiment of the leg-rest assembly 4 having different shaped support panels SP3 to SP7. Further, each of the shown leg-rest assemblies 4, shown in **figures 4A to 4C****,** is arranged on a viewed right side RS of the seat pan frame 5.1, particularly with respect to the front seat pan side 5.1.3. Each of the shown leg-rest assemblies 4 shown in **figures 4D and 4E** is arranged on a viewed left side LS of the seat pan frame 5.1, particularly with respect to the front seat pan side 5.1.3.

Each of the shown support panels SP3 to SP7 is mounted to the second extension portion 10.3. In particular, the support panels SP3 to SP7 can be individualised as desired by an exemplary customer, particularly airline. For instance, each of the support panels SP3 to SP7 can be shaped such that it fits to a desired leg-rest cushion shape or to a seating arrangement of the airline. In particular, the shape of each of the support panels SP3 to SP7 does not affect the displacement mechanism 11. For example, lateral panel sides LSP1, LSP2 can differ from each other. Moreover, each of the support panels SP3 to SP7 can provide rounded corners and/or rounded sides. Exemplarily, each of the support panels SP3 to SP7 can provide a quadrilateral, trapezoidal, oval or any other shape.

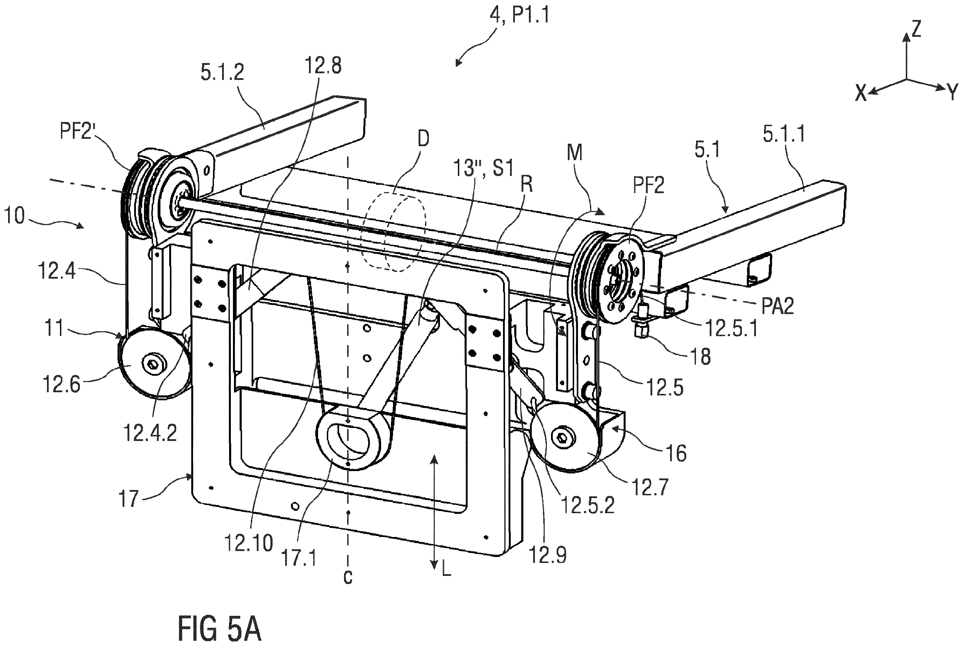

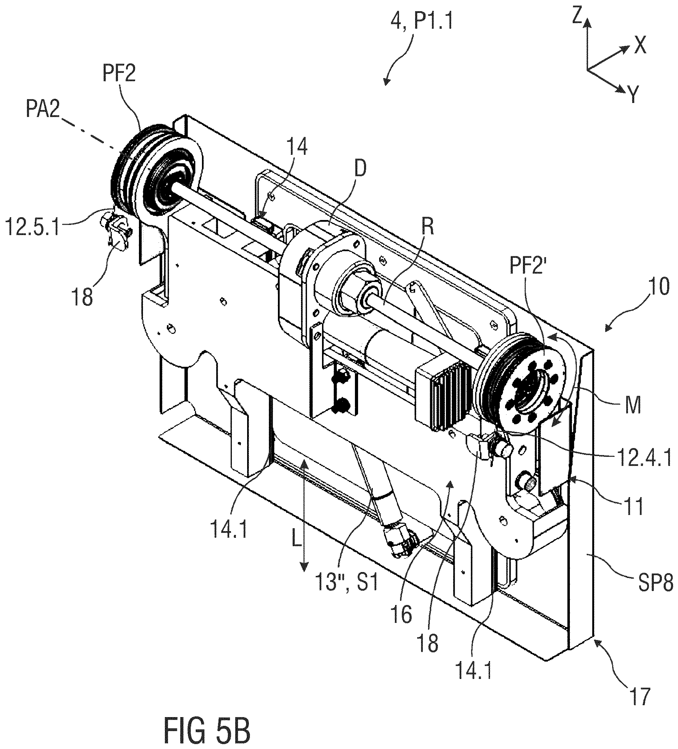

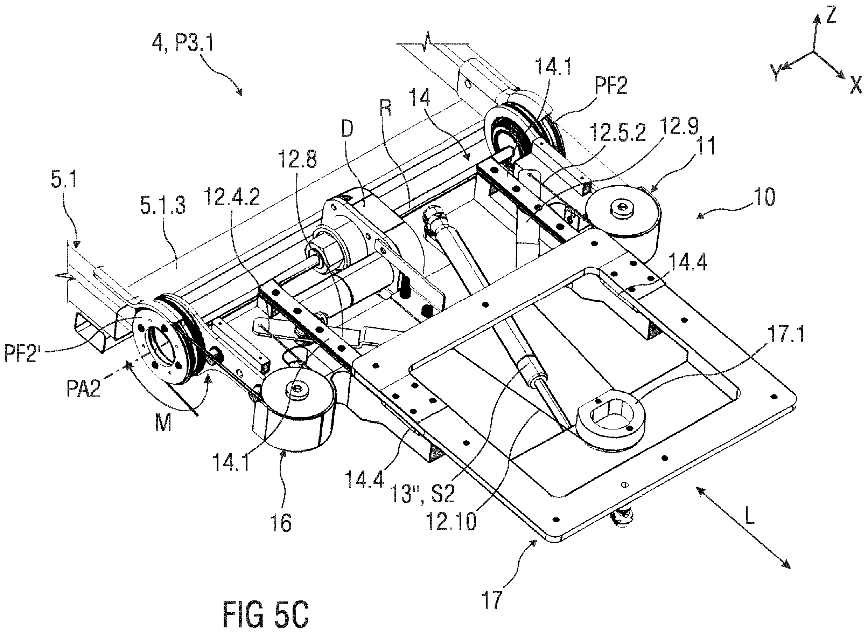

**Figures 5A to 5C** are each a perspective view of another embodiment of the leg-rest assembly 4. In particular, **figure 5A** shows in a perspective front view the leg-rest assembly 4 in the first position P1.1. **Figure 5B** shows in a perspective back view the leg-rest assembly 4 in the first position P1.1. **Figure 5C** shows in a perspective front view the leg-rest assembly 4 in the second position P3.1 corresponding to the sleeping position P3 of the seat 1.

The leg-rest assembly 4 comprises the leg support 10. The leg support 10 is coupled to the seat pan frame 5.1 at the leg-rest pivot axis PA2. Thereby, the leg support 10 is pivotably connected to the seat pan frame 5.1 by two pivot fittings PF2, PF2' in the leg-rest pivot axis PA2. Each of the pivot fittings PF2, PF2' is coupled to one of the lateral seat pan sides 5.1.1, 5.1.2. The transmission rod R is configured as a connection rod coupling the two pivot fittings PF2. For example, the transmission rod R is driven by the adjusting device D, whereas the pivot fittings PF2, PF2' are initiated to execute the pivot movement M.

Further, the leg support 10 comprises a main portion 16 and an extension portion 17. In particular, the extension portion 17 comprises a frame-like shape and is longitudinally displaceable mounted above the main portion 16 such that the extension portion 17 is facing towards the passenger and the main portion 16 is facing towards the seat support structure 5. Particularly, the extension portion 17 is in a stowed and retracted position when the leg support 10 is in the first position P1.1. The extension portion 17 can be driven out from the main portion 16 as the leg support 10 pivots to the second position P3.1. In particular, the longitudinal displacement L is actuated substantially mechanically, initiated by the pivot movement M.

Moreover, the leg support 10 comprises the guide mechanism 14 for the longitudinal displacement L of the extension portion 17 relative to the main portion 16. Thereby, two spaced-apart parallel guide tracks 14.1 are arranged on the main portion 16. The extension portion 17 is coupled to two guide carriages 14.4, wherein each of the guide carriages 14.4 is displaceable, particularly slidable fixed to one of the guide tracks 14.1.

The displacement mechanism 11 is provided to longitudinal adjust the extension portion 17 relative to the main portion 16. Therefore, the displacement mechanism 11 comprises a force transmission configuration 12 which is coupled to the pivot fittings PF2, PF2' and to the leg support 10. The force transmission configuration 12 comprises a number of transmission elements 12.4 to 12.10. An arrangement of the transmission elements 12.4 to 12.10 is configured as a mirrored arrangement along a center line c according to a longitudinal orientation of the leg support 10. Thereby, each of the pivot fittings PF2, PF2' is coupled to one of the transmission elements 12.4, 12.5. The transmission elements 12.4, 12.5 are one of a wire, a cable, a rope or the like.

Particularly, each of the transmission elements 12.4, 12.5 is guide around the corresponding pivot fitting PF2, PF2'. Each of the transmission elements 12.4, 12.5 is equally tautened around the corresponding pivot fittings PF2, PF2'. One end portion 12.4.1, 12.5.1 of each of the transmission elements 12.4, 12.5 is fixed to the front seat pan side 5.1.3 by a fixation element 18. Further, another end portion 12.4.2, 12.5.2 of each of the transmission elements 12.4, 12.5 is guided around a corresponding transmission element 12.6, 12.7, such as a guide pulley. The transmission element 12.6, 12.7 are each arranged in an exemplary shown cavity of the main portion 16. The end portions 12.4.2, 12.5.2 are each fixed to a lever transmission element 12.8, 12.9. The lever transmission elements 12.8, 12.9 are each rotatable mounted to the main portion 16.

In the first position P1.1, the transmission elements 12.4, 12.5 are pulling the lever transmission elements 12.8, 12.9 towards the transmission elements 12.6, 12.7, such as guide pulleys. Further, the lever transmission elements 12.8, 12.9 are coupled to each other by a further wire transmission element 12.10 which particularly provides a synchronisation of the lever transmission elements 12.8, 12.9. The wire transmission element 12.10 is further connected with the extension portion 17, particularly guided around a guide element 17.1. The guide element 17.1 is mounted to the frame-like shaped extension portion 17. For example, the guide element 17.1 is one of a tape or any other substantially circular-shaped element. In particular, the guide element 17.1 is arranged in the center line c of the leg support 10.

Moreover, the displacement mechanism 11 comprises a biasing element 13", wherein one end portion 13.1" is coupled to the main portion 16 and the other end portion 13.2" is coupled to the extension portion 17. For example, the biasing element 13" is one of a pressure spring or a gas pressure spring. In the first position P1.1, the biasing element 13" is in the compressed state S1, wherein the force transmission configuration 12 is configured to hold the biasing element 13" in the compressed state S1. Therefore, the force transmission configuration 12 is configured to release the extension portion 17 as the leg support 10 moves from the first position P1.1 to the second position P3.1, as shown is **figure 5C****.** The pivot movement M of the leg support 10 from the first position P1.1 to the second position P3.1 causes the force transmission configuration 12 to relax or loosen for a short time such that a thrust force of the biasing element 13" is greater than a retraction force of the force transmission configuration 12. In particular, the transmission elements 12.4, 12.5 which are coupled with respect to the pivot fittings PF2, PF2' are configured to relax as the leg support 10 pivots about the pivot axis PA2 such that the end portions 12.4.2, 12.5.2 stop pulling the lever transmission elements 12.8, 12.9. The biasing element 13" is configured to push the extension portion 17 relatively away from the main portion 16, whereas the lever transmission elements 12.8, 12.9 are enabled to rotatable change their orientation.

As the leg support 10 moves from the second position P3.1 back to the first position P1.1, the force transmission configuration 12 is configured to retract, particularly pull back, the extension portion 17 relative to the main portion 16. Thereby, the transmission elements 12.4, 12.5 are configured to retract, particularly pull back, the lever transmission elements 12.8, 12.9. Thus, the lever transmission elements 12.8, 12.9 are forced to change their orientation, whereas the wire transmission element 12.10 pull backs the extension portion 17. Thereby, the retraction force of the force transmission configuration 12 is greater than the thrust force of the biasing element 13".

According to an embodiment, as shown in **figure 5B****,** the extension portion 17 comprises one of a support panel SP8 covering the displacement mechanism 11 and the force transmission configuration 12. Further, the support panel SP8 can provide a leg-, calf- and/or foot-support panel to the passenger.

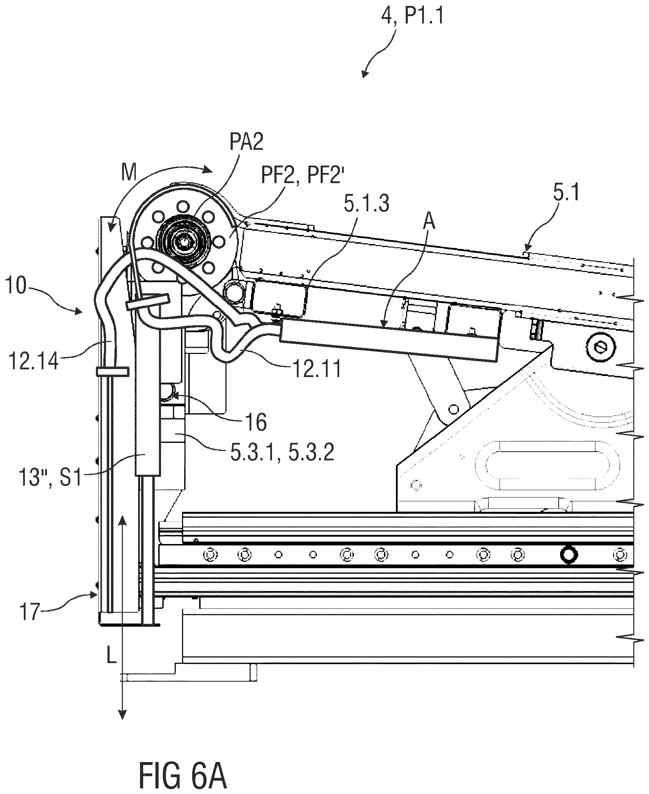

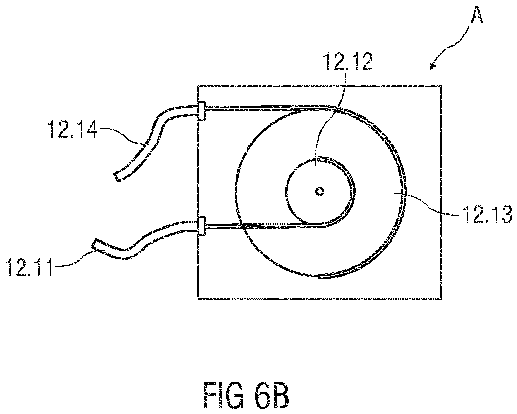

**Figure 6A** shows a schematic side view of another embodiment of the leg-rest assembly 4, showing the leg-rest assembly 4 in the first position P1.1. Further, **figure 6B** shows a schematic top view of one part of the force transmission configuration 12 of the leg-rest assembly 4.

The leg-rest assembly 4 comprises the leg support 10. The leg support 10 is coupled to the seat pan frame 5.1 at the leg-rest pivot axis PA2. Further, the leg support 10 comprises the main portion 16 and the extension portion 17 which is longitudinally displaceable mounted above the main portion 16.

The force transmission configuration 12 comprises a number of transmission elements 12.11 to 12.14. For instance, the first transmission element 12.11 is coupled to one of the pivot fittings PF2, PF2' and is located on one of the lateral leg-rest sides 5.3.1, 5.3.2. The first transmission element 12.11 comprises one of a flexible element, such as a Bowden cable. Particularly, the first transmission element 12.11 is guided around one of the pivot fittings PF2, PF2'. Moreover, the first transmission element 12.11 is configured to convert an angular adjustment, according to the pivot movement M of the leg support 10 to a linear motion, according to the longitudinal displacement L of the extension portion 17. The first transmission element 12.11 is coupled to a second transmission element 12.12 which is arranged within a module A. Particularly, the first transmission element 12.11 is guided around and fixed to the second transmission element 12.12. The second transmission element 12.12 is one of a roller or a guide pulley. Thereby, the module A, which is shown in **figure 6B** in more detail, comprises a housing enclosing the second transmission element 12.12. In particular, the module A is configured as transmission gear of the leg-rest assembly 4. The module A can be mounted outside the leg support 10, particularly to the seat pan frame 5.1, for example on a bottom side of the seat pan frame 5.1. Further, the module A comprises a third transmission element 12.13, such as another guide pulley or roller. The third transmission element 12.13 provides a coupling point for a fourth transmission element 12.14 which is guided around and fixed to the third transmission element 12.13. In particular, the fourth transmission element 12.14 is one of a flexible element, such as a Bowden cable. Exemplarily, each inner wire rope for push applications of the first and fourth transmission elements 12.11, 12.14 is coupled to the module A for force transmission. The fourth transmission element 12.14 is exemplarily located close to a center of the leg support 10, whereas the fourth transmission element 12.14 is configured as linkage transmission device coupling the extension portion 17 and the module A. Further, the biasing element 13", such as a gas pressure spring, is arranged between and coupling both of the main portion 16 and the extension portion 17 to each other.

As the leg support 10 moves from the first position P1.1 to the second position P3.1, the force transmission configuration 12 is configured to retract the extension portion 17 relative to the main portion 16 via the module A. Thereby, the force transmission configuration 12 is configured to compress and hold the biasing element 13" in the compressed state S1. As the leg support 10 moves from the second position P3.1 back to the first position P1.1, the force transmission configuration 12 releases the extension portion 17 by means of the Bowden cables such that biasing element 13" is enabled to push the extension portion 17 away from the main portion 16.

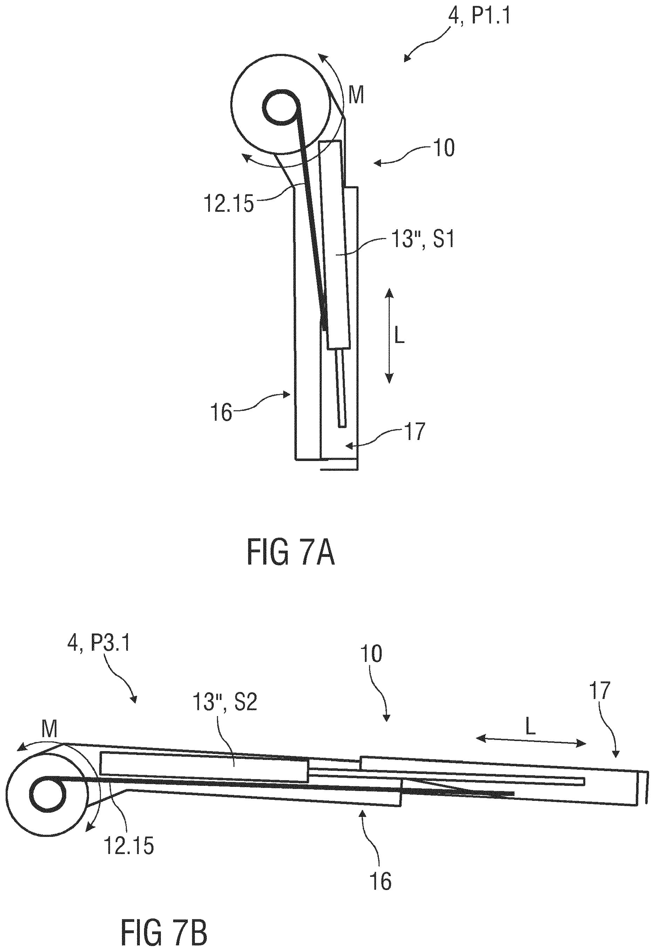

**Figures 7A and 7B** are each a schematic side view of a further embodiment of the leg-rest assembly 4 comprising the leg support 10, a force transmission configuration 12 having a transmission element 12.15 comprising a Bowden cable providing the retraction force, and the biasing element 13", such as a pressure spring providing the thrust force. Particularly, **figure 7A** shows the leg-rest assembly 4 in the first position P1.1, whereas the Bowden cable holds the pressure spring in the compressed state S1, and **figure 7B** shows the leg-rest assembly 4 in the second position P3.1, whereas the Bowden cable is substantially relaxed and the pressure spring is in the deployed state S2.

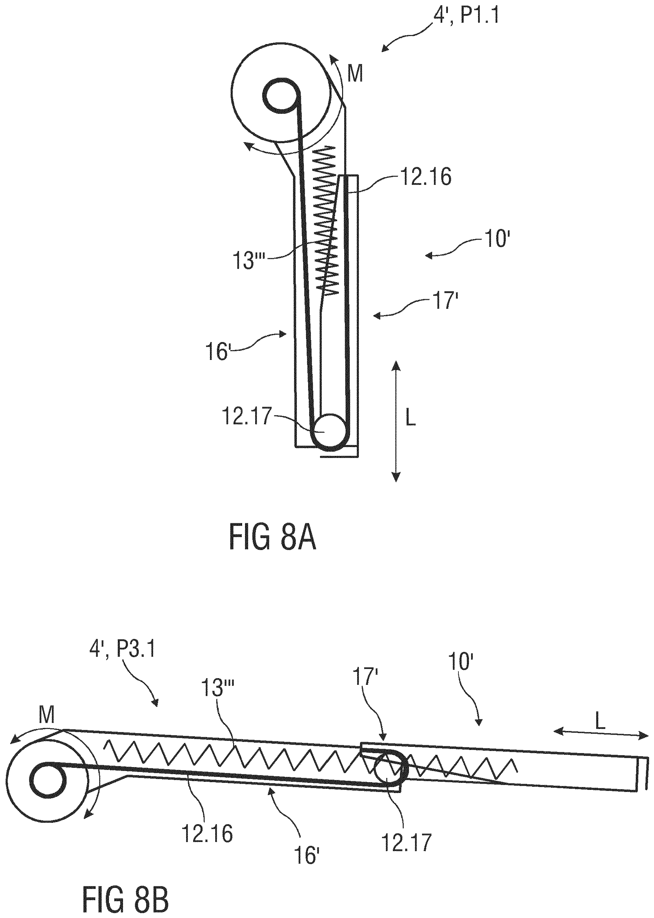

**Figures 8A and 8B** are each a schematic side view of a further possible embodiment of a leg-rest assembly 4' comprising a leg support 10', a force transmission configuration 12' having a transmission element 12.16, such as a Bowden cable providing a pulling force for extending the leg support 10', and a biasing element 13"', such as a tension spring providing a tension force for retracting the leg support 10'. Exemplarily, one end portion 13.1'" of the biasing element 13'" is coupled to the main portion 17' and the other end portion 13.2'" is coupled to the extension portion 16'.

It is understood, that the shown leg-rest assembly 4' in figures 8A and 8B is basically configured as the leg-rest assembly 4 of the above described figures, whereas the leg support 10' of the leg-rest assembly 4' is pivotably mounted to the seat pan frame 5.1 at the leg-rest pivot axis PA2 and further comprises a displacement device 11' for longitudinal displacement L of the extension portion 17' relative to the main portion 16'. Thereby, the longitudinal displacement L of the extension portion 17' depends on the pivot movement M o the leg support 10' with respect to the seat pan frame 5.1.

Particularly, **figure 8A** shows the leg-rest assembly 4' in the first position P1.1 and **figure 8B** shows the leg-rest assembly 4' in the second position P3.1. In particular, a further transmission element 12.17, such as a guide pulley, is mounted to the main portion 16', around which the Bowden cable is guided. The Bowden cable is configured to pull the extension portion 17' relatively away from the main portion 16' to the extended second position P3.1 as the leg support 10' moves from the first position P1.1 to the second position P3.1. Thereby, the pivot movement M of the leg support 10' in direction of the second position P3.1 initiates a pulling action of the Bowden cable, whereas a pulling force of the Bowden cable is greater than a tension force of the tension spring.

Further, the tension spring is configured to retract the extension portion 17' relative to the main portion 16' as the leg support 10' moves from the second position P3.1 to the first position P1.1. Thereby, the pivot movement M of the leg support 10' in direction back to the first position P1.1 substantially initiates a relaxation or loosening of the Bowden cable such that the tension spring is enabled to retract, particularly pull back the extension portion 17' relative to the main portion 16'.

### List of References

- 1: seat
- 2: seat pan
- 3: backrest
- 4, 4': leg-rest assembly
- 5: seat support structure
- 5.1: seat pan frame
- 5.1.1, 5.1.2: lateral seat pan side
- 5.1.3: front seat pan side
- 5.1.4: back seat pan side
- 5.2: backrest frame
- 5.2.1, 5.2.2: lateral backrest side
- 5.3: leg-rest frame
- 5.3.1, 5.3.2: lateral leg-rest side
- 5.3.3: back leg-rest side
- 6: base structure
- 7: mounting element
- 8: track assembly
- 8.1: lower track
- 8.2: upper track
- 9: bracket
- 10, 10': leg support
- 10.1: main portion
- 10.1.1, 10.1.2: lateral frame extension
- 10.1.3: mounting element
- 10.1.4: fixation element
- 10.1.5: guide bar
- 10.2, 10.3: extension portion
- 11: displacement mechanism
- 12, 12': force transmission configuration
- 12.1 to 12.17: transmission elements
- 12.4.1, 12.5.1: end portion
- 12.4.2, 12.5.2: end portion
- 12L: length
- 13 to 13'": biasing element
- 13.1 to 13.2'": end portion
- 14: guide mechanism
- 14.1: guide track
- 14.2 to 14.4: guide carriage
- 14.2.1: recess
- 15: mounting element
- 16, 16': main portion
- 17, 17': extension portion
- 17.1: guide element
- 18: fixation element

- A: module
- C1 to C3: connection point
- D: adjusting device
- D1, D2: distance
- F: vehicle floor
- M: pivot movement
- L: longitudinal displacement
- LS: left side
- LSP1, LSP2: lateral panel side
- P1: TTL position
- P1.1: first position
- P2: comfort position
- P2.1, P2.2: position
- P3: sleeping position
- P3.1: second position
- P3.2, P3.3: position
- PA1, PA2: pivot axis
- PF1, PF2, PF2': pivot fitting
- R: transmission rod
- RS: right side
- SP1 to SP8: support panel
- S1: compressed state
- S2: deployed state

- c: center line
- x: longitudinal axis
- y: transverse axis
- z: vertical axis

## Claims

1. A leg-rest assembly (4, 4') for a seat (1), comprising
- a leg support (10, 10') configured to be pivotably mounted to a seat support structure (5),
- wherein the leg support (10, 10') comprises a main portion (10.1, 16, 16') and at least one extension portion (10.2, 10.3, 17, 17') which is longitudinally displaceable coupled to the main portion (10.1, 16, 16'),
- one power-driven adjusting device (D) for pivoting the leg support (10, 10') relative to the seat support structure (5),
- wherein the leg support (10, 10') is pivotable between a first position (P1.1) and at least a second position (P3.1) relative to the seat support structure (5) by the adjusting device (D), and
- a displacement mechanism (11) coupled to the leg support (10, 10') and which is configured to mechanically control a longitudinal displacement (L) of the extension portion (10.2, 10.3, 17, 17') depending on a pivot movement (M) of the leg support (10, 10'),
- the displacement mechanism (11) comprises at least one force transmission configuration (12, 12') and at least one biasing element (13 to 13'"),
wherein the force transmission configuration (12) is configured to mechanically retract the extension portion (10.2, 10.3, 17, 17') relative to the main portion (10.1, 16, 16') as the leg support (10, 10') pivots from the second position (P3.1) into the first position (P1.1), and the biasing element (13 to 13") is configured to mechanically push the extension portion (10.2, 10.3, 17, 17') relatively away from the main portion (10.1, 16, 16') as the leg support (10, 10') pivots from the first position (P1.1) into the second position (P3.1).

2. The leg-rest assembly (4, 4') according to claim 1, wherein the force transmission configuration (12) is configured to compress the biasing element (13 to 13") as the leg support (10, 10') moves from the second position (P3.1) to the first position (P1.1).

3. The leg-rest assembly (4, 4') according to claim 1 or 2, wherein the force transmission configuration (12) is configured to hold the biasing element (13 to 13") in a compressed state (S1) when the leg support (10, 10') is in the first position (P1.1)

4. The leg-rest assembly (4, 4') according to one of the preceding claims, wherein the force transmission configuration (12) is configured to relax as the leg support (10, 10') moves from the first position (P1.1) to the second position (P3.1).

5. The leg-rest assembly (4, 4') according to one of the preceding claims, wherein the biasing element (13 to 13") is configured to deploy as the leg support (10, 10') moves from the first position (P1.1) to the second position (P3.1).

6. A leg-rest assembly (4, 4') for a seat (1) comprising
- a leg support (10, 10') configured to be pivotably mounted to a seat support structure (5), wherein the leg support (10, 10') comprises a main portion (10.1, 16, 16') and at least one extension portion (10.2, 10.3, 17, 17') which is longitudinally displaceable coupled to the main portion (10.1, 16, 16'),
- one power-driven adjusting device (D) for pivoting the leg support (10, 10') relative to the seat support structure (5), wherein the leg support (10, 10') is pivotable between a first position (P1.1) and at least a second position (P3.1) relative to the seat support structure (5) by the adjusting device (D), and
- a displacement mechanism (11) coupled to the leg support (10, 10') and which is configured to mechanically control a longitudinal displacement (L) of the extension portion (10.2, 10.3, 17, 17') depending on a pivot movement (M) of the leg support (10, 10'),
- the displacement mechanism (11) comprises at least one force transmission configuration (12, 12') and at least one biasing element (13 to 13"'), wherein the force transmission configuration (12') is configured to mechanically pull the extension portion (10.2, 10.3, 17, 17') relatively away from the main portion (10.1, 16, 16') as the leg support (10, 10') pivots from the first position (P1.1) to the second position (P3.1), and the biasing element (13 to 13"') is configured to mechanically retract the extension portion (10.2, 10.3, 17, 17') relative to the main portion (10.1, 16, 16') as the leg support (10, 10') pivots from the second position (P3.1) into the first position (P1.1)

7. The leg-rest assembly (4, 4') according to any one of the preceding claims, wherein the force transmission configuration (12, 12') comprises at least one transmission element (12.1 to 12.17) coupled to the extension portion (10.2, 10.3, 17, 17') and to the main portion (10.1, 16, 16').

8. The leg-rest assembly (4, 4') according to any one of the preceding claims, wherein the force transmission configuration (12, 12') comprises at least one transmission element (12.1 to 12.17) fixed with respect to a pivot axis (PF2, PF2') of the leg support (10, 10') and with respect to the extension portion (10.2, 10.3, 17, 17').

9. The leg-rest assembly (4, 4') according to any one of the preceding claims, wherein the force transmission configuration (12, 12') comprises at least one transmission element (12.1 to 12.17) connected with a pivot fitting (PF2, PF2') of the leg support (10, 10') and fixed with respect to the extension portion (10.2, 10.3, 17, 17').

10. The leg-rest assembly (4, 4') according to one of the claims 8 or 9, wherein the transmission element (12.1 to 12.17) comprises at least one of a flexible element, such as a Bowden cable, or a belt mechanism or a wire mechanism.

11. The leg-rest assembly (4, 4') according to any one of the preceding claims, wherein one end portion (13.1 to 13.1'") of the biasing element (13 to 13"') is fixed to the main portion (10.1, 16, 16') and another end portion (13.2 to 13.2'") of the biasing element (13 to 13'") is fixed to the extension portion (10.2, 10.3, 17, 17').

12. The leg-rest assembly (4, 4') according to any one of the preceding claims, wherein the biasing element (13 to 13'") comprises one of a pressure spring element, a tension spring element or a gas pressure spring element.

13. The leg-rest assembly (4, 4') according to any one of the preceding claims, wherein the leg support comprises at least one guide mechanism (14) for a longitudinal displacement (L) of the extension portion (10.2, 10.3, 17, 17') relative to the main portion (10.1, 16, 16').

14. The leg-rest assembly (4, 4') according to any one of the preceding claims, wherein the extension portion (10.2, 10.3, 17, 17') is coupled to a guide carriage (14.2 to 14.4) of the guide mechanism (14) which is displaceable fixed with respect to a guide track (14.1) of the guide mechanism (14), wherein the guide track (14.1) is fixed to the main portion (10.1, 16, 16').

15. A seat (1), comprising a leg-rest assembly (4, 4') according to claims 1 to 14, wherein the leg-rest assembly (4, 4') is pivotably mounted to a seat support structure (5) comprising
- a seat pan (2) having a seat pan frame (5.1) and
- a backrest (3) having a backrest frame (5.2) which is pivotably mounted to the seat pan frame (5.1) at a backrest pivot axis (PA1), and
- the leg-rest assembly (4, 4') is pivotably mounted to the seat pan frame (5.1) at a leg-rest pivot axis (PA2),
- wherein the leg-rest assembly (4, 4') and the backrest (3) are articulated with respect to the seat pan (2) such that the seat support structure (5) is positionable into at least one of a taxi, takeoff and landing position (P1), a inclined comfort position (P2) or a sleeping position (P3).

## Patentansprüche

1. Beinstützenanordnung (4, 4') für einen Sitz (1), die Folgendes umfasst:
- eine Beinstütze (10, 10'), die so konfiguriert ist, dass sie schwenkbar an einer Sitzstützstruktur (5) montiert werden kann, wobei die Beinstütze (10, 10') einen Hauptabschnitt (10.1, 16, 16') und mindestens einen Verlängerungsabschnitt (10.2, 10.3, 17, 17') umfasst, der in Längsrichtung verschiebbar ist und mit dem Hauptabschnitt (10.1, 16, 16') gekoppelt ist,
- eine elektrisch angetriebene Einstellvorrichtung (D) zum Schwenken der Beinstütze (10, 10') in Relation zu der Sitzstützstruktur (5), wobei die Beinstütze (10, 10') durch die Einstellvorrichtung (D) zwischen einer ersten Position (P1.1) und mindestens einer zweiten Position (P3.1) in Relation zu der Sitzstützstruktur (5) geschwenkt werden kann, und
- einen Verschiebemechanismus (11), der mit der Beinstütze (10, 10') gekoppelt ist und dazu konfiguriert ist, eine Längsverschiebung (L) des Verlängerungsabschnitts (10.2, 10.3, 17, 17') in Abhängigkeit von einer Schwenkbewegung (M) der Beinstütze (10, 10') mechanisch zu steuern, wobei der Verschiebemechanismus (11) mindestens eine Kraftübertragungskonfiguration (12, 12') und mindestens ein Vorspannelement (13 bis 13'") umfasst,
wobei die Kraftübertragungskonfiguration (12) dazu konfiguriert ist, den Verlängerungsabschnitt (10.2, 10.3, 17, 17') in Relation zu dem Hauptabschnitt (10.1, 16, 16') mechanisch zurückzuziehen, wenn die Beinstütze (10, 10') von der zweiten Position (P3.1) in die erste Position (P1.1) schwenkt, und das Vorspannelement (13 bis 13") dazu konfiguriert ist, den Verlängerungsabschnitt (10.2, 10.3, 17, 17') mechanisch von dem Hauptabschnitt (10.1, 16, 16') relativ wegzudrücken, wenn die Beinstütze (10, 10') von der ersten Position (P1.1) in die zweite Position (P3.1) schwenkt.

2. Beinstützenanordnung (4, 4') nach Anspruch 1, wobei die Kraftübertragungskonfiguration (12) dazu konfiguriert ist, das Vorspannelement (13 bis 13") zusammenzudrücken, wenn die Beinstütze (10, 10') sich von der zweiten Position (P3.1) in die erste Position (P1.1) bewegt.

3. Beinstützenanordnung (4, 4') nach Anspruch 1 oder 2, wobei die Kraftübertragungskonfiguration (12) dazu konfiguriert ist, das Vorspannelement (13 bis 13") in einem zusammengedrückten Zustand (S1) zu halten, wenn die Beinstütze (10, 10') sich in der ersten Position (P1.1) befindet.

4. Beinstützenanordnung (4, 4') nach einem der vorhergehenden Ansprüche, wobei die Kraftübertragungskonfiguration (12) dazu konfiguriert ist, sich zu lösen, wenn die Beinstütze (10, 10') sich von der ersten Position (P1.1) in die zweite Position (P3.1) bewegt.

5. Beinstützenanordnung (4, 4') nach einem der vorhergehenden Ansprüche, wobei das Vorspannelement (13 bis 13") dazu konfiguriert ist, sich zu entfalten, wenn die Beinstütze (10, 10') sich von der ersten Position (P1.1) in die zweite Position (P3.1) bewegt.

6. Beinstützenanordnung (4, 4') für einen Sitz (1), die Folgendes umfasst:
- eine Beinstütze (10, 10'), die so konfiguriert ist, dass sie schwenkbar an einer Sitzstützstruktur (5) montiert werden kann, wobei die Beinstütze (10, 10') einen Hauptabschnitt (10.1, 16, 16') und mindestens einen Verlängerungsabschnitt (10.2, 10.3, 17, 17') umfasst, der in Längsrichtung verschiebbar ist und mit dem Hauptabschnitt (10.1, 16, 16') gekoppelt ist,
- eine elektrisch angetriebene Einstellvorrichtung (D) zum Schwenken der Beinstütze (10, 10') in Relation zu der Sitzstützstruktur (5), wobei die Beinstütze (10, 10') durch die Einstellvorrichtung (D) zwischen einer ersten Position (P1.1) und mindestens einer zweiten Position (P3.1) in Relation zu der Sitzstützstruktur (5) geschwenkt werden kann, und
- einen Verschiebemechanismus (11), der mit der Beinstütze (10, 10') gekoppelt ist und dazu konfiguriert ist, eine Längsverschiebung (L) des Verlängerungsabschnitts (10.2, 10.3, 17, 17') in Abhängigkeit von einer Schwenkbewegung (M) der Beinstütze (10, 10') mechanisch zu steuern, wobei der Verschiebemechanismus (11) mindestens eine Kraftübertragungskonfiguration (12, 12') und mindestens ein Vorspannelement (13 bis 13'") umfasst,
wobei die Kraftübertragungskonfiguration (12') dazu konfiguriert ist, den Verlängerungsabschnitt (10.2, 10.3, 17, 17') mechanisch von dem Hauptabschnitt (10.1, 16, 16') relativ wegzudrücken, wenn die Beinstütze (10, 10') von der ersten Position (P1.1) in die zweite Position (P3.1) schwenkt, und das Vorspannelement (13 bis 13'") dazu konfiguriert ist, den Verlängerungsabschnitt (10.2, 10.3, 17, 17') in Relation zu dem Hauptabschnitt (10.1, 16, 16') mechanisch zurückzuziehen, wenn die Beinstütze (10, 10') von der zweiten Position (P3.1) in die erste Position (P1.1) schwenkt.

7. Beinstützenanordnung (4, 4') nach einem der vorhergehenden Ansprüche, wobei die Kraftübertragungskonfiguration (12, 12') mindestens ein Übertragungselement (12.1 bis 12.17) umfasst, das mit dem Verlängerungsabschnitt (10.2, 10.3, 17, 17') und dem Hauptabschnitt (10.1, 16, 16') gekoppelt ist.

8. Beinstützenanordnung (4, 4') nach einem der vorhergehenden Ansprüche, wobei die Kraftübertragungskonfiguration (12, 12') mindestens ein Übertragungselement (12.1 bis 12.17) umfasst, das in Bezug auf eine Schwenkachse (PF2, PF2') der Beinstütze (10, 10') und in Bezug auf den Verlängerungsabschnitt (10,2, 10.3, 17, 17') fest ist.

9. Beinstützenanordnung (4, 4') nach einem der vorhergehenden Ansprüche, wobei die Kraftübertragungskonfiguration (12, 12') mindestens ein Übertragungselement (12.1 bis 12.17) umfasst, das mit einer Schwenkarmatur (PF2, PF2') der Beinstütze (10, 10') verbunden ist und in Bezug auf den Verlängerungsabschnitt (10,2, 10.3, 17, 17') fest ist.

10. Beinstützenanordnung (4, 4') nach einem der Ansprüche 8 oder 9, wobei die Kraftübertragungskonfiguration (12.1 bis 12.17) mindestens eines aus einem flexiblen Element wie zum Beispiel einem Bowdenkabel, oder einem Riemenmechanismus oder einem Drahtmechanismus umfasst.

11. Beinstützenanordnung (4, 4') nach einem der vorhergehenden Ansprüche, wobei ein Endabschnitt (13.1 bis 13.1'") des Vorspannelements (13 bis 13'") an dem Hauptabschnitt (10.1, 16, 16') befestigt ist und ein weiterer Endabschnitt (13.2 bis 13.2'") des Vorspannelements (13 bis 13'") an dem Verlängerungsabschnitt (10.2, 10.3, 17, 17') befestigt ist.

12. Beinstützenanordnung (4, 4') nach einem der vorhergehenden Ansprüche, wobei das Vorspannelement (13 bis 13'") eines aus einem Druckfederelement, einem Zugfederelement oder einem Gasdruckfederelement umfasst.

13. Beinstützenanordnung (4, 4') nach einem der vorhergehenden Ansprüche, wobei die Beinstütze mindestens einen Führungsmechanismus (14) für eine Längsverschiebung (L) des Verlängerungsabschnitts (10.2, 10.3, 17, 17') in Relation zu dem Hauptabschnitt (10.1, 16, 16') umfasst.

14. Beinstützenanordnung (4, 4') nach einem der vorhergehenden Ansprüche, wobei der Verlängerungsabschnitt (10.2, 10.3, 17, 17') mit einem Führungsschlitten (14.2 bis 14.4) des Führungsmechanismus (14) gekoppelt ist, der in Bezug auf eine Führungsschiene (14.1) des Führungsmechanismus (14) verschiebbar fest ist, wobei die Führungsschiene (14.1) am Hauptabschnitt (10.1, 16, 16') befestigt ist.

15. Sitz (1), der eine Beinstützenanordnung (4, 4') nach den Ansprüchen 1 bis 14 umfasst, wobei die Beinstützenanordnung (4, 4') schwenkbar an einer Sitzstützstruktur (5) angebracht ist, die Folgendes umfasst:
- eine Sitzschale (2) mit einem Sitzschalenrahmen (5.1), und
- eine Rückenlehne (3) mit einem Rückenlehnenrahmen (5.2), der an einer Rückenlehnenschwenkachse (PA1) schwenkbar an dem Sitzschalenrahmen (5.1) angebracht ist, und
- wobei die Beinstützenanordnung (4, 4') an einer Beinstützenschwenkachse (PA2) schwenkbar an dem Sitzschalenrahmen (5.1) angebracht ist;
- wobei die Beinstützenanordnung (4, 4') und die Rückenlehne (3) in Bezug auf die Sitzschale (2) derart angelenkt sind, dass die Sitzstützstruktur (5) in mindestens eine aus einer Taxi-, einer Start- und Landeposition (P1), einer geneigten Komfortposition (P2) oder einer Schlafposition (P3) positionierbar ist.

## Revendications

1. Ensemble repose-jambes (4, 4') destiné à un siège (1), comprenant :
- un support de jambes (10, 10') conçu pour être monté pivotant sur une structure de support de siège (5), ledit support de jambes (10, 10') comprenant une partie principale (10.1, 16, 16') et au moins une partie d'extension (10.2, 10.3, 17, 17') couplée longitudinalement déplaçable à la partie principale (10.1, 16, 16'),
- un dispositif de réglage à entraînement électrique (D) permettant de faire pivoter le support de jambes (10, 10') par rapport à la structure de support de siège (5), ledit support de jambes (10, 10') pouvant pivoter entre une première position (P1.1) et au moins une deuxième position (P3.1) par rapport à la structure de support de siège (5) sous l'effet du dispositif de réglage (D), et
- un mécanisme de déplacement (11) couplé au support de jambes (10, 10') et conçu pour commander par voie mécanique un déplacement longitudinal (L) de la partie d'extension (10.2, 10.3, 17, 17') en fonction d'un pivotement (M) du support de jambes (10, 10'), ledit mécanisme de déplacement (11) comprenant au moins une configuration de transmission de force (12, 12') et au moins un élément de sollicitation (13 à 13"'),
ladite configuration de transmission de force (12) étant conçue pour rétracter mécaniquement la partie d'extension (10.2, 10.3, 17, 17') par rapport à la partie principale (10.1, 16, 16') tandis que le support de jambes (10, 10') pivote de la deuxième position (P3.1) à la première position (P1.1), et l'élément de sollicitation (13 à 13") est conçu pour pousser mécaniquement la partie d'extension (10.2, 10.3, 17, 17') à distance relative de la partie principale (10.1, 16, 16') tandis que le support de jambes (10, 10') pivote de la première position (P1.1) à la deuxième position (P3.1).

2. Ensemble repose-jambes (4, 4') selon la revendication 1, dans lequel la configuration de transmission de force (12) est conçue pour comprimer l'élément de sollicitation (13 à 13") tandis que le support de jambes (10, 10') passe de la deuxième position (P3.1) à la première position (P1.1).

3. Ensemble repose-jambes (4, 4') selon la revendication 1 ou 2, dans lequel la configuration de transmission de force (12) est conçue pour retenir l'élément de sollicitation (13 à 13") dans un état comprimé (S1) lorsque le support de jambes (10, 10') est dans la première position (P1.1).

4. Ensemble repose-jambes (4, 4') selon l'une des revendications précédentes, dans lequel la configuration de transmission de force (12) est conçue pour se relâcher tandis que le support de jambes (10, 10') passe de la première position (P1.1) à la deuxième position (P3.1).

5. Ensemble repose-jambes (4, 4') selon l'une des revendications précédentes, dans lequel l'élément de sollicitation (13 à 13") est conçu pour se déployer tandis que le support de jambes (10, 10') passe de la première position (P1.1) à la deuxième position (P3.1).

6. Ensemble repose-jambes (4, 4') destiné à un siège (1), comprenant :
- un support de jambes (10, 10') conçu pour être monté pivotant sur une structure de support de siège (5), ledit support de jambes (10, 10') comprenant une partie principale (10.1, 16, 16') et au moins une partie d'extension (10.2, 10.3, 17, 17') couplée longitudinalement déplaçable à la partie principale (10.1, 16, 16'),
- un dispositif de réglage à entraînement électrique (D) permettant de faire pivoter le support de jambes (10, 10') par rapport à la structure de support de siège (5), ledit support de jambes (10, 10') pouvant pivoter entre une première position (P1.1) et au moins une deuxième position (P3.1) par rapport à la structure de support de siège (5) sous l'effet du dispositif de réglage (D), et
- un mécanisme de déplacement (11) couplé au support de jambes (10, 10') et conçu pour commander par voie mécanique un déplacement longitudinal (L) de la partie d'extension (10.2, 10.3, 17, 17') en fonction d'un pivotement (M) du support de jambes (10, 10'), ledit mécanisme de déplacement (11) comprenant au moins une configuration de transmission de force (12, 12') et au moins un élément de sollicitation (13 à 13"'),
ladite configuration de transmission de force (12') étant conçue pour pousser mécaniquement la partie d'extension (10.2, 10.3, 17, 17') à distance relative de la partie principale (10.1, 16, 16') tandis que le support de jambes (10, 10') pivote de la première position (P1.1) à la deuxième position (P3.1), et l'élément de sollicitation (13 à 13'") est conçu pour rétracter mécaniquement la partie d'extension (10.2, 10.3, 17, 17') par rapport à la partie principale (10.1, 16, 16') tandis que le support de jambes (10, 10') pivote de la deuxième position (P3.1) à la première position (P1.1).

7. Ensemble repose-jambes (4, 4') selon l'une quelconque des revendications précédentes, dans lequel la configuration de transmission de force (12, 12') comprend au moins un élément de transmission (12.1 à 12.17) couplé à la partie d'extension (10.2, 10.3, 17, 17') et à la partie principale (10.1, 16, 16').

8. Ensemble repose-jambes (4, 4') selon l'une quelconque des revendications précédentes, dans lequel la configuration de transmission de force (12, 12') comprend au moins un élément de transmission (12.1 à 12.17) fixe par rapport à un axe de pivotement (PF2, PF2') du support de jambes (10, 10') et par rapport à la partie d'extension (10.2, 10.3, 17, 17').

9. Ensemble repose-jambes (4, 4') selon l'une quelconque des revendications précédentes, dans lequel la configuration de transmission de force (12, 12') comprend au moins un élément de transmission (12.1 à 12.17) relié à une pièce à pivot (PF2, PF2') du support de jambes (10, 10') et fixe par rapport à la partie d'extension (10.2, 10.3, 17, 17').

10. Ensemble repose-jambes (4, 4') selon l'une des revendications 8 et 9, dans lequel l'élément de transmission (12.1 à 12.17) comprend un ou plusieurs des éléments suivants : un élément flexible, tel qu'un câble Bowden, un mécanisme à courroie ou un mécanisme à fil métallique.

11. Ensemble repose-jambes (4, 4') selon l'une quelconque des revendications précédentes, dans lequel une partie terminale (13.1 à 13.1"') de l'élément de sollicitation (13 à 13"') est fixée à la partie principale (10.1, 16, 16') et une autre partie terminale (13.2 à 13.2"') de l'élément de sollicitation (13 à 13"') est fixée à la partie d'extension (10.2, 10.3, 17, 17').

12. Ensemble repose-jambes (4, 4') selon l'une quelconque des revendications précédentes, dans lequel l'élément de sollicitation (13 à 13"') comprend un élément formant ressort de pression, un élément formant ressort de tension ou un élément formant ressort à pression de gaz.

13. Ensemble repose-jambes (4, 4') selon l'une quelconque des revendications précédentes, dans lequel le support de jambes comprend au moins un mécanisme de guidage (14) permettant un déplacement longitudinal (L) de la partie d'extension (10.2, 10.3, 17, 17') par rapport à la partie principale (10.1, 16, 16').

14. Ensemble repose-jambes (4, 4') selon l'une quelconque des revendications précédentes, dans lequel la partie d'extension (10.2, 10.3, 17, 17') est couplée à un chariot de guidage (14.2 à 14.4) du mécanisme de guidage (14) qui est fixe déplaçable par rapport à une voie de guidage (14.1) du mécanisme de guidage (14), ladite voie de guidage (14.1) étant fixée à la partie principale (10.1, 16, 16').

15. Siège (1), comprenant un ensemble repose-jambes (4, 4') selon les revendications 1 à 14, ledit ensemble repose-jambes (4, 4') étant monté pivotant sur une structure de support de siège (5) comprenant :
- un fond de siège (2) doté d'un châssis de fond de siège (5.1), et
- un dossier (3) doté d'un châssis de dossier (5.2) qui est monté pivotant au châssis de fond de siège (5.1) au niveau d'un axe de pivotement de dossier (PA1), et
ledit ensemble repose-jambes (4, 4') étant monté pivotant au châssis de fond de siège (5.1) au niveau d'un axe de pivotement de repose-jambe (PA2),
ledit ensemble repose-jambes (4, 4') et le dossier (3) étant articulés par rapport au fond de siège (2) de façon que la structure de support de siège (5) puisse être mise dans au moins une position parmi : une position de mouvement au sol, décollage ou atterrissage (P1), une position confortable inclinée (P2) ou une position de sommeil (P3).
